# EUROPÄISCHE PATENTANMELDUNG

(11) **EP 4 723 297 A2**
(43) Veröffentlichungstag der Anmeldung: **08.04.2026**
(21) Anmeldenummer: 26151697.5
(22) Anmeldetag: 28.03.2023
(51) Int. Cl.: H01M 10/54

(54) **VERFAHREN UND ANLAGE ZUR AUFBEREITUNG UND VERWERTUNG VON BATTERIEN**

(30) Priorität: 29.03.2022 DE 102022203084; 26.01.2023 DE 102023200645
(62) Teilanmeldung aus: 23715823.3
(71) Anmelder: PRIMOBIUS GMBH, 57271 Hilchenbach (DE)
(72) Erfinder: Breuer, Michael, 57271 Hilchenbach (DE); Gier-Zucketto, Joachim, 52146 Würselen (DE)
(74) Vertreter: Duda, Rafael Thomas

(57) **Zusammenfassung**

Die vorliegende Anmeldung betrifft ein Verfahren zur Aufbereitung und Verwertung von Lithium-Ionen-Batterien umfassend wenigstens einen Schritt, in dem eine Zerkleinerung der Batterien (2, 10) in Gegenwart eines wässrigen Mediums (12) erfolgt, wobei die Batterien (2, 10) noch mit einer Restladung von maximal 30 % unter Zugabe von Wasser (12) in einer Zerkleinerungseinrichtung (73) zerkleinert werden, wobei das Wasser (12) in einer solchen Menge und mit einer solchen Temperatur zugeführt wird, dass sich das Gemisch beim Zerkleinern nicht über eine Temperatur von mehr als 40 °C, bevorzugt nicht über eine Temperatur von 30 °C hinaus erwärmt; sowie eine entsprechende Anlage (71).

## Beschreibung

Die vorliegende Erfindung betrifft ein Verfahren zur Aufbereitung und Verwertung von Lithium-Ionen-Batterien umfassend wenigstens einen Schritt, in dem eine Zerkleinerung der Batterien in Gegenwart eines wässrigen Mediums erfolgt, sowie eine Anlage zur Aufbereitung und Verwertung von Lithium-Ionen-Batterien, die vorzugsweise dazu ausgebildet ist, das erfindungsgemäße Verfahren auszuführen.

Lithium-Ionen-Batterien werden durch den zunehmenden Einsatz in elektrisch angetriebenen Kraftfahrzeugen als Energieträger in naher Zukunft in großen Mengen während der Produktion und am Ende Ihrer Lebensdauer als Müll anfallen. Diese Batterien sind aus verschiedenen wertvollen Materialien gefertigt, die im Verbund vorliegen. Im Wesentlichen sind dies:
Kunststoffe, Eisenmetalle, Kupfer, Aluminium, Grafit als Anodenwerkstoff, Metalloxide als Kathodenwerkstoff, Lithium, Kobalt, Nickel, Mangan und andere seltene wertvolle Werkstoffe sowie Elektrolyt.

Etwa 50 % der Batteriemodule bestehen aus der sogenannten "black-mass", in der die besonders kostbaren Rohstoffe gebunden sind und die wesentlich aus feinem Grafit und Lithium-Metalloxiden in einer Größe im Bereich von 0,5 bis 10 µm besteht. Daneben sind aber auch Nickel, Mangan, Kupfer, Kobalt als besonders wertvolle Bestandteile anzusehen.

Der Verbund der Batterieblöcke ist so geartet, dass eine kontrollierte Demontage, zum Beispiel durch Lösen einer Verschraubung praktisch nicht möglich ist. Zudem sind sehr unterschiedliche Formate handelsüblich. Deshalb sind grundsätzlich die Herstellervorschriften vor und während des Entladungs- sowie Zerlegungsprozesses zu beachten. Je nach Batterietyp, kann es sogar notwendig werden, spezielle Einrichtungen innerhalb der Batterie zur Freischaltung der Batterieanschlüsse zu aktivieren, um die Entladung durchführen zu können. Nach dem Öffnen der Batterie und der Entladung müssen die Bestandteile aufgetrennt werden. Die Metalle und die Kunststoffe des Gehäuses können getrennt sortiert der Kreislaufwirtschaft zugeführt werden, wobei hier bereits geeignete Recycling-Verfahren angewandt werden.

Die verbliebenen Batterieblöcke bestehen aus einzelnen Batteriezellen und/oder - modulen. Je nach Bauart der Batterie ist es möglich, die Zellen einfach zu vereinzeln, jedoch gibt es auch Batterien, bei denen sich die Auftrennung der Batterieblöcke sehr aufwendig gestaltet, so dass es hier bislang im Stand der Technik kein zufriedenstellendes Verfahren zum Recyceln der Blöcke aber auch der Zellen gibt. Die unangenehme Eigenschaft dieser Batterien liegt darin, dass eine vollständige Entladung nur sehr zeitaufwändig möglich ist und die Batterien nach einem Entladungszyklus nach kurzer Zeit wieder Spannung, d.h. einen Ladungszustand aufweisen. Eine nicht vollständig entladene Batterie erleidet in der Regel beim Öffnen einen Kurzschluss, der durch die Hitzeeinwirkung den Elektrolyten entzünden kann. Die Folge sind unvorhersehbare Verpuffungen bis hin zu Bränden.

Bei den bislang aus dem Stand der Technik bekannten Lösungen wird teils versucht, die Batterien unter Rückgewinnung der Metalle thermisch zu verwerten, wobei aber Kunststoffe, Elektrolyt und Lithium vollständig oder große Anteile davon verloren gehen. Bei manchen Verfahren werden die Batteriezellen zerkleinert und direkt in den nasschemischen Prozess überführt. Die Batteriezellen werden dabei nur unzureichend vor dem anschließenden nasschemischen Fällungsverfahren abgetrennt. Die im nasschemischen Prozess aufzuarbeitende Menge verdoppelt sich dadurch. Ein derartiges nasschemisches Verfahren ist beispielsweise in der EP 3 670 686 A1 beschrieben.

Bei der thermischen Verwertung gehen zudem kostbare Rohstoffe in der black-mass wie beispielsweise Lithium, Grafit, Nickel, Kobalt und andere Metalle verloren. Es entsteht eine hohe Belastung der Fällungschemie bzw. des nasschemischen Verfahrens durch metallische und andere Rückstände der Batteriehüllen und Leiter.

Aus der DE 10 2011 082 187 A1 ist ein Verfahren zur Zerkleinerung von LiPF6 enthaltenden Batterien bekannt, bei dem die Batterie einem Zerkleinerungsprozess unterzogen wird, der mittels wenigstens eines mechanisch auf die Batterie einwirkenden Werkzeuges realisiert wird, wobei der Zerkleinerungsprozess in einem die Batterie umgebenden Umgebungsfluid stattfindet, welches wenigstens ein Erdalkalimetall aufweist. Das Umgebungsfluid ist eine wässrige Lösung, die Calcium oder Magnesium enthält, welche als basische Hydroxide Ca(OH)2 bzw. Mg(OH)2 vorliegen und in wässriger Lösung mit dem bei Zersetzung von LiPF6 entstehenden Fluorwasserstoff (kurz HF) zu schwerlöslichem CaF2 bzw. MgF2 reagieren und so gebunden werden.

Ausgehend von den vorgenannten Problemen der aus dem Stand der Technik bekannten Methoden besteht die Aufgabe der vorliegenden Erfindung darin, ein effektives Verfahren zur Verfügung zu stellen, bei dem aus Batterien, die entweder aus dem Produktionsausschuss stammen oder das Ende ihrer Lebensdauer erreicht haben, wertvolle Rohstoffe für die Kreislaufwirtschaft gewonnen werden können.

### Beschreibung der Erfindung

Erfindungsgemäß wird die Aufgabe durch ein Verfahren mit den Merkmalen des Patentanspruchs 1 gelöst.

Das erfindungsgemäße Verfahren zur Aufbereitung und Verwertung von Lithium-Ionen Batterien umfasst wenigstens einen Schritt, in dem eine Zerkleinerung der Batterien in Gegenwart eines wässrigen Mediums erfolgt, wobei erfindungsgemäß vorgesehen ist, dass die Batterien noch mit einer Restladung von maximal 30 % unter Zugabe von Wasser in einer Zerkleinerungseinrichtung zerkleinert werden, wobei das Wasser in einer solchen Menge und mit einer solchen Temperatur zugeführt wird, dass sich das Gemisch beim Zerkleinern nicht über eine Temperatur von mehr als 40 °C, bevorzugt nicht über eine Temperatur von 30 °C hinaus erwärmt.

Überraschenderweise hat sich gezeigt, dass die vollständige Entladung der Batterien für den anschließenden Trennprozess nicht notwendig ist, wodurch der Aufwand im Vorprozess des Verfahrens verringert werden kann. Die bei der teilweisen Entladung gewonnene Energie kann zudem vorteilhafterweise wieder verwendet werden.

Die Zugabe einer ausreichenden Menge Wasser bei der Zerkleinerung der Batterien verhindert nicht nur eine stärkere Erwärmung, sondern es konnte zudem überraschend festgestellt werden, dass der schädliche Fluorwasserstoff nicht oder zumindest nicht in einer messbaren Konzentration freigesetzt wird. Derzeit wird davon ausgegangen, dass die Reaktion der Hydrolyse von LiPF₆ in reinem Wasser im Gegensatz zur Hydrolyse in verunreinigtem Elektrolytwasser nur sehr langsam verläuft, wie nachfolgend dargestellt:
Zunächst zersetzt sich das LiPF₆ in Wasser nach der Gleichung:

LiPF₆ → LiF + PF₅

Erst bei der anschließenden Reaktion

PF₅ + H₂O → POF₃ + 2 HF

würde Fluorwasserstoff entstehen.

Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Gemäß einer bevorzugten Weiterbildung der vorliegenden Erfindung wird das Wasser vorzugsweise bezogen auf eine Menge von 1000 kg Batterien pro Stunde in einer Menge von 20 bis 200 m³/h zugeführt. Durch den großen und kontinuierlichen Volumenstrom wird die bei der mechanischen Zerkleinerung der Batterien sowie in dem Hydrolyseprozess entstehende Wärme unmittelbar abgeführt. Gemäß der vorliegenden Erfindung erfolgt die Zerkleinerung somit bevorzugt nicht in einem stehenden Wasserreservoir, sondern der Zerkleinerungseinrichtung, in der die Zerkleinerung stattfindet, wird ständig Wasser zugeführt und wieder abgeführt, so dass die im Prozess entstehende Wärme ebenfalls permanent abgeführt wird.

Gemäß der Erfindung kann bei der Zerkleinerung der Batterien beispielsweise gewöhnliches Leitungswasser mit einer Temperatur unter der Raumtemperatur zugeführt werden. Bevorzugt ist jedoch vorgesehen, dass das Wasser mit einer Temperatur im Bereich von 5 °C bis 20 °C zugeführt wird.

Die Wasserwirtschaft kann zum Beispiel als Kreislaufsystem angelegt sein. So kann das Wasser dem Zerkleinerungs- und/oder dem Trennprozess aus einem Speicherbehälter zugeführt und downstream-seitig, beispielsweise dort wo die Trocknung abgetrennter Partikel erfolgt, beispielsweise in einer Siebpresse, wieder aufgefangen und sodann in den Zerkleinerungs- und/oder den Trennprozess zurückgeführt werden. Zur Aufbereitung des Kreislaufwassers können insbesondere auch Filtersysteme eingesetzt werden, so dass die Abluft einer beispielsweise im System verwendeten Vakuumpumpe kondensiert und das Kondensat dem Speicherbehälter wieder zugeführt werden kann. Wenn weiteres Wasser benötigt wird, kann dieses aus dem Leitungsnetz zugeführt werden (sog. make-up-Wasser). Das Kreislaufwasser kann hinsichtlich diverser Parameter überwacht werden, wie beispielsweise der pH-Wert, die Leitfähigkeit, die Biozität, Farbe oder dergleichen. Gegebenenfalls können jeweils Teilmengen des Kreislaufwassers ausgetauscht werden. Die benötigte Kreislaufwassermenge für den erfindungsgemäßen Trennprozess liegt in etwa bei 20 bis 200 m³/h/t Batterien. Bei zweistufiger Zerkleinerung ist die Verwendung von mindestens 20 m³/h/t empfehlenswert, vorzugsweise mindestens 50 m³/h/t. Bei dreistufiger Zerkleinerung setzt man vorzugsweise mindestens 50 m³/h/t Kreislaufwasser ein, besonders bevorzugt etwa 100 m³/h pro Tonne Batterien.

Vorzugsweise erfolgt das Zerkleinern der Batterien, insbesondere der Batteriezellen und/oder Batteriemodule, in mindestens zwei Stufen, derart, dass diese zunächst in einer ersten Stufe grob vorzerkleinert werden, bevor sie in einer sich anschließenden zweiten Stufe feiner zerkleinert werden. Die Auswahl der Anzahl der Zerkleinerungsstufen, beispielsweise zwei, drei oder mehr solcher Stufen, hängt von der Größe des eingebrachten Materials ab. Bei kompletten Batteriemodulen mit einer Größe von beispielsweise mehr als 0,5 m ist ein dreistufiges Zerkleinerungssystem von Vorteil. Bei einzelnen Batteriezellen oder kleineren Einheiten mit einer Größe von weniger als beispielsweise 0,5 m ist in der Regel ein zweistufiges System ausreichend.

Die lichte Messerbreite in der Zerkleinerungseinrichtung, die in der jeweils letzten Zerkleinerungsstufe eingesetzt wird, liegt bevorzugt bei weniger als etwa 12 mm, vorzugsweise bei weniger als etwa 9 mm. Die lichte Messerbreite in der vorletzten Stufe kann dann beispielsweise bei weniger als 25 mm, vorzugsweise bei etwa 19 mm liegen. Bei mehr als zwei Zerkleinerungsstufen liegt die lichte Messerweite der drittletzten Stufe zum Beispiel bei weniger als etwa 60 mm, vorzugsweise weniger als etwa 45 mm. Die spezifische Antriebsleistung, das heißt die Antriebsleistung je Durchsatzleistung in kg/h von Batteriezellen und/oder -modulen für die Messerwellen liegt bei ungefähr 50 W/kg Batteriezellen und/oder -modulen pro Stunde, vorzugsweise bei etwa 80 bis 120 W/kg/h.

Gemäß einer bevorzugten Weiterbildung der Erfindung wird das die zerkleinerten Batterien und das Wasser umfassende Gemisch in eine erste wässrige Grafit-angereicherte Fraktion, welche vorzugsweise auch die Metalloxide enthält, und eine zweite nicht-wässrige Grafit-abgereicherte Fraktion aufgetrennt, welche noch eine Restfeuchte aufweisen kann.

Besonders bevorzugt erfolgt die Auftrennung in die erste und die zweite Fraktion über zwei separate Prozessstufen, derart, dass das Gemisch zunächst in einer ersten Prozessstufe, beispielsweise in einem Friktionswäscher
i) in eine erste wässrige Grafit-angereicherte Fraktion umfassend partikuläre Bestandteile mit einer Größe von < 5000 µm, vorzugsweise mit einer Größe von < 4000 µm, mehr bevorzugt mit einer Größe von < 3000 µm, noch mehr bevorzugt mit einer Größe von < 2000 µm und eine zweite nicht-wässrige Grafit-abgereicherte Fraktion umfassend partikuläre Bestandteile mit einer Größe von > 5000 µm, vorzugsweise mit einer Größe von > 4000 µm, mehr bevorzugt mit einer Größe von > 3000 µm, noch mehr bevorzugt mit einer Größe von > 2000 µm aufgetrennt wird. Für die Zerkleinerung kann beispielsweise ein Schredder verwendet werden, wobei die erste Fraktion sodann in einem Puffertank unterhalb dieses Schredders aufgefangen und danach vorzugsweise weiter aufgetrennt werden kann. So ist vorzugsweise vorgesehen, dass ii) die erste wässrige Grafit-angereicherte Fraktion umfassend die partikulären Bestandteile mit einer Größe von < 5000 µm, vorzugsweise mit einer Größe von < 4000 µm, mehr bevorzugt mit einer Größe von < 3000 µm, noch mehr bevorzugt mit einer Größe von < 2000 µm sodann in einer zweiten Prozessstufe, insbesondere mittels einer Siebstufe, in eine erste wässrige Grafit-angereicherte und von den partikulären Bestandteilen befreite Fraktion, insbesondere eine Fraktion von Partikeln mit einer Größe von kleiner als 500 µm, und eine nicht-wässrige Grafit-abgereicherte und mit den partikulären Bestandteilen beladene Fraktion, insbesondere eine Fraktion von Partikeln mit einer Größe von mehr als 500 µm, aufgetrennt wird.

Gemäß einer bevorzugten Weiterbildung der Erfindung wird danach vorzugsweise die erste wässrige Grafit-angereicherte, und gegebenenfalls von den partikulären Bestandteilen befreite Fraktion, von Wasser befreit, so dass eine getrocknete Grafit-haltige Fraktion erhalten wird. Unter "getrocknet" wird im Sinne der vorliegenden Erfindung verstanden, dass die genannte Fraktion wenigstens einen Trocknungsvorgang durchlaufen hat, aber noch eine Restfeuchte enthält. In der Praxis hat sich gezeigt, dass diese Fraktion nach einer Trocknung im Mittel noch etwa 25 % Restfeuchte enthalten kann. Der Trocknungsvorgang kann zum Beispiel in einer Filterpresse erfolgen. Diese Fraktion enthält bei dem erfindungsgemäßen Verfahren einen großen Teil der wertvollen black-mass, die unter Aufbringung von Druck durch einen Filter gepresst und so weitgehend von Wasser befreit werden kann. Anschließend kann die vorgetrocknete black-mass in einem Behälter zwischengelagert werden.

Gemäß einer bevorzugten Weiterbildung der vorgenannten Variante des Verfahrens kann das bei dem Trocknungsprozess erhaltene Wasser gesammelt, sodann über einen Wärmetauscher abgekühlt und anschließend der Zerkleinerungseinrichtung und/oder dem die zerkleinerten Batterien und das Wasser umfassenden Gemisch wieder zugeführt werden. Das Wasser kann dabei partikuläre Bestandteile mit einer Größe von beispielsweise bis zu 500 µm aufweisen. Alternativ und/oder ergänzend kann das Wasser dem Prozess auch über einen Friktionswäscher, welcher stromabwärts der Zerkleinerungseinrichtung angeordnet ist, zugeführt werden.

Vorzugsweise wird gemäß einer Weiterbildung der Erfindung die zweite nicht-wässrige Grafit-abgereicherte Fraktion, gegebenenfalls die zweite nicht-wässrige Grafit-abgereicherte Fraktion umfassend partikuläre Bestandteile mit einer Größe von > 5000 µm, vorzugsweise mit einer Größe von > 4000 µm, mehr bevorzugt mit einer Größe von > 3000 µm, noch mehr bevorzugt mit einer Größe von > 2000 µm über eine Trenneinrichtung, insbesondere einen Zick-Zack-Sichter bzw. einen Zick-Zack-Abscheider geführt und in eine schwere Fraktion enthaltend partikuläre Bestandteile mit einer Schüttdichte von mindestens 0,02 kg/m³ und in eine leichte Fraktion enthaltend partikuläre Bestandteile mit einer Schüttdichte von maximal 0,4 kg/m³ aufgetrennt. Die hier angestrebte Schüttdichte kann nach Bedarf eingestellt werden.

Vorzugsweise wird die eine erste Grafit-haltige Nebenfraktion enthaltende schwere Fraktion einer weiteren Zerkleinerungseinrichtung, insbesondere einer Prallmühle, zugeführt und in dieser zerkleinert.

Vorzugsweise wird weiterhin die zerkleinerte und die erste Grafit-haltige Nebenfraktion enthaltende schwere Fraktion in sortenreine metallische Fraktionen aufgetrennt. Dabei können die gegebenenfalls mitgerissenen Kunststoffe gesammelt und die mitgerissene black-mass dem nasschemischen Verfahren zugeführt werden.

Vorzugsweise wird außerdem das während des Trennungsprozesses und/oder des Zerkleinerungsprozesses entstehende und einen Teil der ersten Grafit-haltigen Nebenfraktion enthaltende Aerosol abgesaugt und der darin enthaltene Teil der ersten Grafit-haltigen Nebenfraktion abgetrennt, insbesondere abgefiltert.

Zusammenfassend kann der zuvor geschilderte bevorzugte weitere Trennprozess wie folgt beschrieben werden. Die Metalle und Kunststoffe werden bevorzugt in einem Trennverfahren separiert, welches die Dichtedifferenzen ausnutzt, wobei im freien Fall querverlaufende Luftströmungen für eine Trennung der schwereren Metalle von den leichteren Kunststoffresten und Folienresten sorgen. Eine weitere Zerkleinerungseinrichtung, insbesondere eine Prallmühle, schlägt die an den Metallen befindliche black-mass ab. Eine Absaugung fängt den Staub auf, der im Wesentlichen aus black-mass besteht. Eine Siebkaskade trennt vorzugsweise die Bestandteile nach ihrer Größe sortiert auf. Magnetseparatoren können beispielsweise dazu dienen, die ferromagnetischen Bestandteile zu separieren. Die übrigen Metalle können beispielsweise durch Ausnutzung der Dichtedifferenzen mit einem Lufttrenntisch oder dergleichen voneinander getrennt werden. Die Metalle werden bevorzugt getrennt aufgefangen und gesammelt und können der Kreislaufwirtschaft zugeführt werden. Die leichteren Kunststoffe werden vorzugsweise ebenfalls aufgefangen und können der Kreislaufwirtschaft zugeführt werden. Die black-mass wird bevorzugt ebenfalls gesammelt, um dann einer weiteren Aufbereitung zugeführt zu werden.

Gemäß einer bevorzugten Weiterbildung des erfindungsgemäßen Verfahrens wird die nicht-wässrige Grafit-abgereicherte und mit den partikulären Bestandteilen beladene Fraktion, gegebenenfalls über eine Trocknungseinrichtung, insbesondere einen Vakuumtrockner, getrocknet. Die feuchten Kleinteile mit anhaftender black-mass durchlaufen hier insbesondere einen Vakuumtrockner, wobei bevorzugt die gleichen Prozessschritte zur weiteren Auftrennung durchlaufen werden können, wie sie zuvor in dem Trennprozess beschrieben wurden.

Das während des Trocknungsprozesses entstehende dampfförmige Kondensatwasser kann beispielsweise zunächst zum Warmwasser kondensiert und gegebenenfalls sodann über einen Wärmetauscher abgekühlt werden. Das sodann erhaltende Wasser kann ebenfalls der Zerkleinerungseinrichtung und/oder dem die zerkleinerten Batterien und das Wasser umfassenden Gemisch wieder zugeführt werden.

Gemäß einer vorteilhaften Weiterbildung der vorliegenden Erfindung kann die getrocknete nicht-wässrige Grafit-abgereicherte und mit den partikulären Bestandteilen beladene Fraktion, welche eine zweite Grafit-haltige Nebenfraktion umfassen kann, vorzugsweise einer weiteren Zerkleinerungseinrichtung, insbesondere einer Prallmühle zugeführt und darin zerkleinert werden.

Bei dieser Verfahrensvariante kann die zerkleinerte und die zweite Grafit-haltige Nebenfraktion enthaltende Fraktion beispielsweise anschließend in weitere sortenreine metallische Fraktionen aufgetrennt werden. Dabei können die gegebenenfalls mitgerissenen Kunststoffe gesammelt, wohingegen die mitgerissene black-mass dem nasschemischen Verfahren zugeführt werden kann, zwecks Aufbereitung gemeinsam mit der übrigen black-mass.

Weiterhin wird vorzugsweise das während des Zerkleinerungsprozesses entstehende und einen Teil der zweiten Grafit-haltigen Nebenfraktion enthaltende weitere Aerosol abgesaugt, wobei der darin enthaltene Teil der zweiten Grafit-haltigen Nebenfraktion abgetrennt, insbesondere abgefiltert, wird.

Gemäß einer bevorzugten Weiterbildung des erfindungsgemäßen Verfahrens wird zur weiteren Behandlung derjenigen Fraktionen, welche den Hauptteil der black-mass enthalten, vorzugsweise die getrocknete Grafit-haltige Fraktion und/oder die erste und/oder die zweite Grafit-haltige Nebenfraktion mit konzentrierter Schwefelsäure versetzt, so dass ein Grafit-haltiger Aufschluss erhalten wird, wobei der erhaltene Grafit-haltige Aufschluss sodann beispielsweise direkt gefiltert wird, so dass Grafit und eine schwefelsaure Lösung erhalten werden.

Das abgefilterte Grafit kann dann vorzugsweise gereinigt, insbesondere mit Wasser gespült werden. Weiterhin kann bei dieser bevorzugten Variante des erfindungsgemäßen Verfahrens anschließend die schwefelsaure Lösung, die zumindest ein Metall der ersten und/oder der dritten Hauptgruppe und/oder zumindest ein Metall der 7. bis 11. Nebengruppe umfasst, nasschemisch aufgetrennt und/oder nasschemisch extrahiert werden.

Die in den verschiedenen oben beschriebenen Trennprozessen gewonnene black-mass wird erfindungsgemäß anschließend bevorzugt in einem nasschemischen Prozess weiter aufgearbeitet, insbesondere mittels Schwefelsäure aufgelöst, bis die Metalle in der Säure in Lösung gegangen sind. Über eine Siebpresse kann beispielsweise der Grafit abgeschieden, gesammelt und der Wiederverwertung zugeführt werden.

Die einzelnen Metalle, insbesondere ausgewählt aus der Reihe umfassend Lithium, Aluminium, Mangan, Eisen, Cobalt, Nickel, Kupfer können beispielsweise durch gezielte Einstellung der Säurekonzentration und/oder der Temperatur aus der Säurelösung ausgefällt, gesammelt und der Kreislaufwirtschaft zugeführt werden.

Es können auch Säuren oder spezielle Zwischenprodukte, die für die Grundstoffindustrie von besonderem Interesse sind, direkt aus dem Verfahren entnommen werden.

Die Säure wird vorzugsweise in einem Kreislaufsystem geführt.

Zusammenfassend werden nachfolgend einige bevorzugte Maßnahmen aufgelistet, die der nasschemischen Aufbereitung der zuvor durch die Trennprozesse gewonnenen black-mass dienen:
- die black-mass und die Zwischenprodukte können mittels Schwefelsäure und/oder Ammoniak und/oder Wasserperoxid und/oder Wasser und/oder organischen Lösungsmitteln in Lösung gebracht werden, wobei diese einzeln oder als Lösungsmittelgemisch eingesetzt werden können;
- das Grafit kann durch eine Filterpresse von der Flüssigkeit getrennt werden;
- in einem stufenweise aufgebauten Prozess kann die Flüssigkeit weiterverarbeitet werden;
- die Flüssigkeit kann jeweils von einer Prozessstufe zur folgenden Prozessstufe geleitet werden;
- die Flüssigkeit wird vorzugsweise im Kreislauf geführt;
- Schwefelsäure, Wasserstoffperoxid, Ammoniak und/oder organische Lösungsmittel können zur Sicherstellung der chemischen Reaktionen und Einstellung des pH-Werts bei Bedarf zugeführt werden;
- als Endprodukte entstehen Ammoniumsulfat und Metallsulfate, die zur weiteren Verwertung aus dem System ausgeschleust werden können;
- die in den einzelnen Prozessstufen auftretenden Gase können durch eine Absaugung beispielsweise einem Filtersystem, bestehend aus einem Nasswäscher und/oder einem Zyklonabscheider und/oder einem Filter zugeführt werden;
- die in der Flüssigkeit befindlichen Metalle können als Sulfate durch Einstellung des pH-Wertes und/oder Phasentrennung und/oder Kristallisation insbesondere schrittweise aus der Flüssigkeit abgetrennt werden;
- Aluminium und Eisen können beispielsweise gemeinsam abgetrennt werden;
- Kupfer kann beispielsweise einzeln abgetrennt werden;
- Mangan und Kobalt können beispielsweise zunächst gemeinsam und dann in einem Folgeschritt separiert werden;
- Nickel kann beispielsweise einzeln abgetrennt werden und/oder
- Lithium kann einzeln abgetrennt werden.

Wenn komplette Autobatterien, die in der Regel als relativ große Bauteile ausgeführt sind, angeliefert werden, sind die Konstruktion und die elektrischen Anschlüsse grundsätzlich unterschiedlich ausgeführt, da jeder Automobilhersteller einen eigenen spezifischen Aufbau hat. In diesen Fällen können zusätzliche Maßnahmen bzw. Modifikationen des Aufbereitungsprozesses sinnvoll sein. Beispielsweise können die Autobatterien herstellerspezifisch erkannt und soweit spezifisch entladen und demontiert werden, bis die einzelnen Batteriezellen und/oder -module separiert sind. Hierzu empfiehlt es sich, die Dokumentation des Herstellers zu Rate zu ziehen und gegebenenfalls Hilfseinrichtungen, beispielsweise Sicherheitseinrichtungen innerhalb der Batterie zum Entladungszweck zu deaktivieren. Das Batteriegehäuse wird je nach verwendeten Werkstoffen ebenfalls zerlegt und sortenrein spezifisch der Kreislaufindustrie zugeführt, ebenso wie vorhandene Leiter, Isolatoren und andere Komponenten.

Die Entladung kann beispielsweise entweder an der kompletten Autobatterie oder an den einzelnen Batteriezellen und/oder -modulen nach der Montage stattfinden. Die Entladungsenergie der Batterien wird vorzugsweise wiederverwertet, beispielsweise durch direkte Netzeinspeisung, Pufferspeicher oder dergleichen.

Die Mischerwelle des in dem ersten Trennprozess verwendeten Separators bzw. Schredders kann insbesondere mit einer Umdrehungszahl von mindestens 500 UpM, vorzugsweise mehr als 1000 UpM, weiter bevorzugt mit mehr als 1500 UpM betrieben werden, um effektive Strömungsverhältnisse und Bewegungen der Partikel in der Zerkleinerungseinrichtung zu erzielen.

Der Vakuumtrockner kann beispielsweise bei einem Druck von weniger als 900 mbar betrieben werden. Die Temperatur im Inneren des Trockners sollte bevorzugt bei mehr als 100 °C liegen.

Vorteilhaft ist die Verwendung eines Steuerungssystems mit einer Prozessüberwachung, die geeignet ist, Wasserzulauf und/oder die Menge der Batterien, insbesondere der Batteriezellen und/oder Batteriemodule, und/oder Konzentration der black-mass aufzuzeichnen und/oder zu überwachen.

Die in dem erfindungsgemäßen Verfahren vorzugsweise verwendeten angebundenen Absaugsysteme können die Stäube auffangen und sie über ein Filtersystem umfassend beispielsweise einen Nasswäscher und/oder Feinstfilter mit Aktivkohle und/oder Zyklonabscheider führen, um die Belastung der Umwelt auf ein Minimum zu reduzieren.

Im Gegensatz zum Stand der Technik werden bei dem erfindungsgemäßen Verfahren bevorzugt keine Abbindemittel zum Abbinden des LiPF₆ verwendet, wie dies beispielsweise in der DE 10 2011 082 187 A1 beschrieben ist.

Das erfindungsgemäße Verfahren kann entweder kontinuierlich oder diskontinuierlich durchgeführt werden, während es sich bei den bislang aus dem Stand der Technik bekannten Verfahren stets nur um Batchprozesse handelt. Die erfindungsgemäße Zerkleinerungseinrichtung arbeitet bevorzugt kontinuierlich.

Aus dem nasschemischen Verfahren können gemäß einer bevorzugten Weiterbildung des Verfahrens für die Rohstoffindustrie wichtige Säuren abgeführt werden. Im nasschemischen Prozessteil werden insbesondere Schwefelsäure und/oder Ammoniak für den Löseprozess verwendet. Die Einstellung der Temperatur und der Säurekonzentration folgt vorzugsweise den Ausfällungsregeln für die jeweiligen Metalle nacheinander in einer Kaskade, wobei separate Behälter je nach Einstellung genutzt werden können.

Besondere Vorteile des erfindungsgemäßen Verfahrens liegen insbesondere darin, dass gegebenenfalls mehr als etwa 95 % der Bestandteile der black-mass wieder in die Kreislaufindustrie (recycling) zurückgeführt werden können. Die Metallsulfate können so rein (mehr als 99 %-ig) gewonnen werden, dass sie direkt in der Rohstoffindustrie wieder verwendet werden können.

Durch das nasse Zerkleinern der Batterien wird die Gefahr von Verpuffungen oder sogar Bränden auf ein Minimum reduziert. Das Wasser reduziert sofort die Temperatur, so dass eine chemische Kettenreaktion verhindert wird.

Durch die mechanisch/fluidtechnische Abtrennung der black-mass von den Metallen und Kunststoffen werden die Folgeprozessschritte mit deutlich weniger Material belastet und können somit effektiver und kostengünstiger betrieben werden. Der größte Teil der black-mass kann beispielsweise über den Filterkuchen einer Filterpresse direkt dem nasschemischen Teil des Verfahrens zugeführt werden, wobei nicht unbedingt eine Vakuumtrocknung erforderlich ist, so dass das Verfahren sehr energieeffizient ausgeführt werden kann. Es geht bei dem Verfahren praktisch kein wertvoller Rohstoff verloren.

Die an den Kunststoffen anhaftende black-mass lässt sich auf Grund der hohen vander-Wals-Kräfte nicht wirtschaftlich entfernen und bedingt damit wesentlich den Anteil des nicht in die Aufbereitung rückführbaren Materials.

Alle verwendeten Medien können im Kreislauf geführt werden, so dass der Einsatz von Ressourcen auf ein Minimum reduziert ist. Der Energieeinsatz ist durch die Verwendung rein mechanisch/fluidtechnischer Verfahren deutlich geringer als bei thermischen Auftrennverfahren.

Gegenstand der vorliegenden Erfindung ist neben dem zuvor beschriebenen Verfahren weiterhin eine Anlage zur Aufbereitung und Verwertung von Lithium-Ionen-Batterien, welche vorzugsweise dazu ausgebildet ist, das erfindungsgemäße Verfahren auszuführen, umfassend wenigstens eine Zerkleinerungseinrichtung, die eine mit einem wässrigen Medium umspülbare Zerkleinerungseinheit aufweist, wobei erfindungsgemäß die Anlage weiterhin mindestens eine der Zerkleinerungseinrichtung im Transportweg nachgeschaltete (erste) Trenneinrichtung aufweist, welche wenigstens ein Sieb umfasst, geeignet in der Zerkleinerungseinrichtung gewonnenes Material in wenigstens zwei Fraktionen unterschiedlicher Partikelgröße aufzutrennen.

Gemäß einer bevorzugten Weiterbildung der Erfindung umfasst die Zerkleinerungseinheit zumindest zwei der Schwerkraft folgend untereinander angeordnete Zerkleinerungsstufen.

Gemäß einer bevorzugten Weiterbildung der Erfindung weist die Anlage wenigstens eine der ersten Trenneinrichtung im Transportweg nachgeschaltete weitere Trenneinrichtung auf, welche wenigstens ein Sieb umfasst, geeignet wenigstens eine zuvor in der ersten Trenneinrichtung abgetrennte Fraktion in wenigstens zwei weitere Fraktionen unterschiedlicher Partikelgröße aufzutrennen.

Gemäß einer bevorzugten Weiterbildung der Erfindung umfasst die wenigstens eine erste Trenneinrichtung eine im Transportweg nachgeschaltete Trocknungseinrichtung, vorzugsweise eine Filterpresse oder einen Vakuumtrockner, für die Trocknung wenigstens einer mittels der Trenneinrichtung zuvor abgetrennten Fraktion.

Gemäß einer bevorzugten Weiterbildung der Erfindung ist die wenigstens eine Zerkleinerungseinrichtung als Prallmühle ausgebildet, wobei diese Prallmühle im Transportweg wenigstens einer Trenneinrichtung nachgeschaltet ist und dazu dient, die Partikel einer zuvor abgetrennten Fraktion weiter zu verkleinern.

Gemäß einer bevorzugten Weiterbildung der Erfindung umfasst die Anlage wenigstens eine weitere Trenneinrichtung, mittels derer leichtere und schwerere Partikel durch eine Querluftströmung im freien Fall voneinander getrennt werden, wobei diese weitere Trenneinrichtung im Transportweg wenigstens einer Trenneinrichtung, die ein Sieb umfasst, nachgeschaltet ist.

Gemäß einer bevorzugten Weiterbildung der Erfindung umfasst die Anlage im Transportweg stromabwärts wenigstens einer Zerkleinerungseinrichtung und stromabwärts wenigstens einer Trenneinrichtung wenigstens einen Anlagenbereich, in dem die Partikel wenigstens einer zuvor abgetrennten Fraktion in einem flüssigen Medium in Lösung gebracht und anschließend einem weiteren Trennprozess unterzogen werden, wobei dieser Anlagenbereich insbesondere eine Einrichtung zum Sieben und/oder Pressen und/oder Einstellen des pH-Werts und/oder Extrahieren und/oder Auskristallisieren umfasst.

### Figurenbezeichnung

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
Figur 1 eine beispielhafte schematische Beschreibung des Vorprozesses im erfindungsgemäßen Verfahren;
Figur 2 eine beispielhafte schematische Beschreibung des Auftrennungsprozesses als Teil des erfindungsgemäßen Verfahrens;
Figur 3 eine beispielhafte schematische Beschreibung eines weiteren Teilprozesses des erfindungsgemäßen Verfahrens;
Figur 4 eine beispielhafte schematische Beschreibung eines weiteren Teilprozesses des erfindungsgemäßen Verfahrens;
Figur 5 eine beispielhafte schematische Beschreibung des chemischen Teilprozesses des erfindungsgemäßen Verfahrens;
Figur 6 ein schematisch vereinfachtes Fließbild einer ersten Phase eines beispielhaften erfindungsgemäßen Prozesses;
Figur 7 ein schematisch vereinfachtes Fließbild eines sich anschließenden Trennprozesses, welcher Teil des erfindungsgemäßen Verfahrens ist;
Figur 8 ein schematisch vereinfachtes Fließbild eines weiteren, sich anschließenden Trennprozesses, welcher ebenfalls Teil des erfindungsgemäßen Verfahrens ist;
Figur 9 ein schematisch vereinfachtes Fließbild eines weiteren, sich anschließenden Trennprozesses, welcher ebenfalls Teil des erfindungsgemäßen Verfahrens ist.

Nachfolgend werden der Ablauf einer Ausführungsvariante des erfindungsgemäßen Verfahrens sowie der Aufbau einer Ausführungsvariante der erfindungsgemäßen Anlage zur Aufbereitung von Batterien zwecks Verwertung darin enthaltener Materialien näher erläutert.

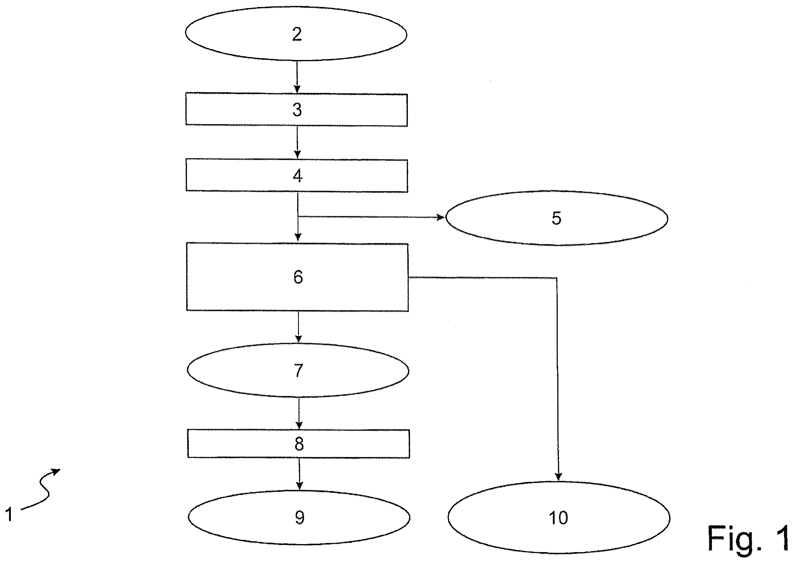

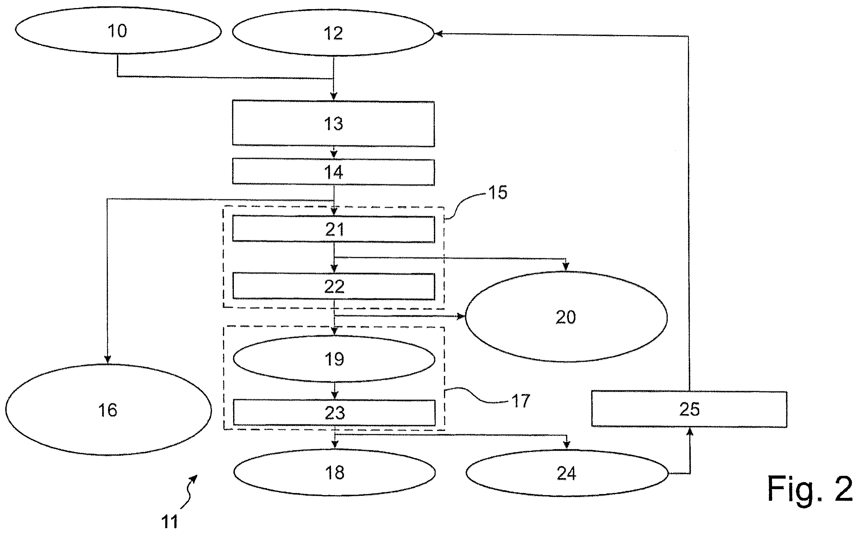

Dem eigentlichen Prozess zur Zerkleinerung der Batterien und Auftrennung der Bestandteile ist zunächst ein Vorprozess 1 vorgeschaltet, welcher in der schematischen Darstellung gemäß Figur 1 beschrieben ist. In diesem Vorprozess 1 werden zunächst aus Fahrzeugen stammende Batterien 2, die beispielsweise ein Ende ihrer Lebensdauer erreicht haben, und ggf. Batteriezellen und/oder Batteriemodule, die während ihrer Produktion aussortiert worden sind und einer Demontage bedürfen, demontiert. Diese Batterien, Batteriezellen und/oder Batteriemodule 2, die nachfolgend unter dem allgemeinen Begriff Batterien 2 verstanden werden, werden einmalig, ggf. nach einer Identifikation des Typs (Schritt 3), entladen (Schritt 4), wobei jedoch gemäß der Erfindung bewusst keine vollständige Entladung vorgesehen ist, da diese - wie bereits erläutert - sehr aufwändig ist. Zudem wurde überraschenderweise festgestellt, dass eine vollständige Entladung für den nachfolgenden Aufbereitungsprozess nicht notwendig ist. Hierdurch kann zu dem aus dem Stand der Technik bekannten Verfahren somit eine viel größere Menge an Batterien 2 pro Zeiteinheit aufbereitet und verwertet werden, wodurch die Produktivität einer entsprechenden Anlage erheblich gesteigert werden kann. Die bei der teilweisen Entladung der Batterien 2 gewonnene elektrische Energie 5 kann anderweitig genutzt werden. Die weiteren Bestandteile 7 der Batterien 2, die während der Demontage 6 anfallen, wie insbesondere das Gehäuse, die Verkabelung, Armaturen und dergleichen werden sortiert und der Kreislaufwirtschaft zugeführt. Dazu werden die unterschiedlichen Materialien voneinander getrennt und sortiert (Schritt 8), wobei die sodann sortenrein getrennten Reststoffe 9 anschließend einem Recycling zugeführt werden können. Die aus den Batterien 2 in diesem Vorprozess vereinzelten Batterien, Batteriezellen und/oder Batteriemodule 10 werden dann dem ersten Teilprozess 11 zugeführt, welcher in Figur 2 beschrieben ist und anhand dieser Darstellung nachfolgend erläutert wird.

Die vereinzelten Batterien, Batteriezellen und/oder Batteriemodule, die nachfolgend unter dem allgemeinen Begriff vereinzelte Batterien 10 verstanden werden, werden zunächst mit Wasser 12 versetzt und vorzugsweise in einem mehrstufigen Zerkleinerungsprozess 13 zerkleinert, beispielsweise mittels eines Schredders. Das Wasser 12 wird ständig zugeführt und dient unter anderem zur Ableitung der im Prozess entstehenden Wärme, so dass es nicht zur Freisetzung von Fluorwasserstoff (kurz HF) kommt. Nach dem Zerkleinerungsprozess bzw. -schritt 13 kann das die zerkleinerten Batterien und das Wasser umfassende Gemisch in eine erste wässrige Grafit-angereicherte Fraktion 15 und eine zweite nicht-wässrige Grafit-abgereicherte Fraktion 16 aufgetrennt werden (Trennungsschritt 14), beispielsweise in dem das Gemisch zentrifugiert und geschleudert wird.

Die gemäß dem Trennungsschritt 14 erhaltene erste wässrige Grafit-angereicherte Fraktion 15, die den überwiegenden Anteil der black-mass enthält, umfasst vorzugsweise partikuläre Bestandteile mit einer Größe von < 3 mm, wohingegen die zweite nicht-wässrige Grafit-abgereicherte Fraktion 16 vorzugsweise partikuläre Bestandteile mit einer Größe von > 3 mm umfasst. Die erste wässrige Grafit-angereicherte Fraktion 15 kann gemäß einem Trocknungsschritt 17 direkt von dem Wasser befreit werden, so dass eine getrocknete Grafit-haltige Fraktion 18, die den überwiegenden Anteil der black-mass enthält, erhalten wird.

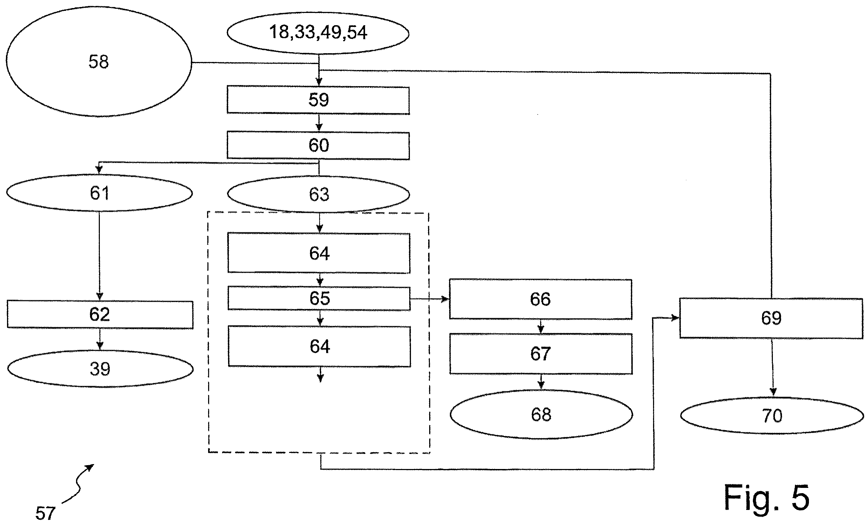

Unter "black-mass" werden im Sinne der vorliegenden Erfindung die meist wertvollen Rohstoffe verstanden, die anschließend in einem nasschemischen Verfahren abgetrennt werden können, wie dies gemäß Figur 5 gezeigt ist.

Die erste wässrige Grafit-angereicherte Fraktion 15 kann aber auch zunächst in eine erste wässrige Grafit-angereicherte und von den partikulären Bestandteilen befreite Fraktion 19 und in eine nicht-wässrige Grafit-abgereicherte und mit den partikulären Bestandteilen beladene Fraktion 20 aufgetrennt werden. Beispielsweise kann diese in mehreren Schritten zunächst grob (Schritt 21) und danach fein (Schritt 22) gesiebt werden, um die nicht-wässrige Grafit-abgereicherte und mit den partikulären Bestandteilen beladene Fraktion 20 zu erhalten. Die sodann erhaltene erste wässrige Grafit-angereicherte und von den partikulären Bestandteilen befreite Fraktion 19 kann anschließend beispielsweise durch Pressen (Schritt 23) von dem Wasser befreit werden. Das verunreinigte Wasser 24 kann, nachdem es gegebenenfalls durch geeignete Maßnahmen gereinigt und aufbereitet wurde (Schritt 25), in den Wasserkreislauf zurückgeführt und im Prozess erneut genutzt werden.

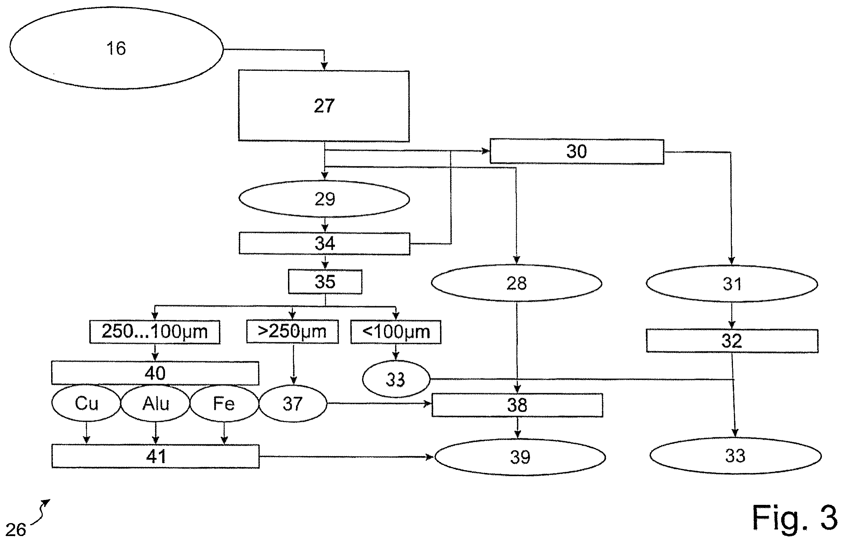

Die zweite nicht-wässrige Grafit-abgereicherte Fraktion 16, die beispielsweise noch feuchte Kleinteile mit einer Partikelgröße im Bereich von etwa 3 mm bis etwa 10 mm sowie Folien und Metalle enthalten kann, wird einem zweiten Teilprozess 26 zur Verarbeitung zugeführt, welcher in Figur 3 dargestellt ist und anhand dieser Darstellung nachfolgend näher erläutert wird.

Gemäß der Darstellung von Figur 3 wird die zweite nicht-wässrige Grafit-abgereicherte Fraktion 16 mittels eines weiteren Trennungsschritts 27 in eine leichte und eine schwerere Fraktion 28, 29 getrennt, wozu man beispielsweise eine Querluftströmung verwenden kann, wenn sich die Partikel im freien Fall befinden. Das hierbei während des Trennungsschritts bzw. -prozesses 27 entstehende und einen Teil einer ersten Grafit-haltigen Nebenfraktion 33 enthaltende Aerosol 31 kann durch einen Absaugschritt 30 dem Trennungsschritt 27 entzogen und über einen Trennungsschritt 32 gefiltert werden, sodass der darin enthaltene Teil der ersten Grafit-haltigen Nebenfraktion 33 abgetrennt, insbesondere abgefiltert wird.

Die schwereren metallischen Partikel (schwere Fraktion 29), die den Hauptteil der ersten Grafit-haltigen Nebenfraktion 33 enthalten, können nach der oben beschriebenen Abtrennung gemäß Trennungsschritt 27 einer Zerkleinerungseinrichtung, insbesondere einer Prallmühle 34 zugeführt werden, in der eine weitere Zerkleinerung erfolgt. Die hierbei erhaltenen unterschiedlichen Fraktionen können anschließend durch einen Siebvorgang 35 voneinander getrennt werden, nämlich in eine erste mittlere Fraktion mit Partikeln mit einer Größenordnung im Bereich von etwa 250 µm bis etwa 100 µm, eine gröbere Fraktion mit Partikeln in einer Größenordnung von mehr als 250 µm und eine dritte feinere Fraktion mit Partikeln in einer Größenordnung von weniger als 100 µm. Die dritte feinere Fraktion umfasst sodann den Hauptteil der ersten Grafit-haltigen Nebenfraktion 33, die mit der nach durchlaufen des Trennungsschritts bzw. Filtersystems 32 anfallenden black-mass Fraktion vereinigt und ebenfalls der nasschemischen Aufbereitung zugeführt werden kann (siehe Figur 5).

Die gröbere in Figur 3 dargestellte Fraktion (> 250 µm) enthält in der Regel überwiegend Kunststoffe 37. Diese kann gesammelt 38 und in eine Kreislaufwirtschaft 39 zurückgeführt werden, wie dies ebenfalls in Figur 3 dargestellt ist. Die mittlere Fraktion hingegen kann beispielsweise mittels eines Lufttrenntisches und/oder eines Magnetabscheiders 40 weiter aufgetrennt werden, um so die Metalle Kupfer, Aluminium und Eisen sortenrein zu sammeln 41.

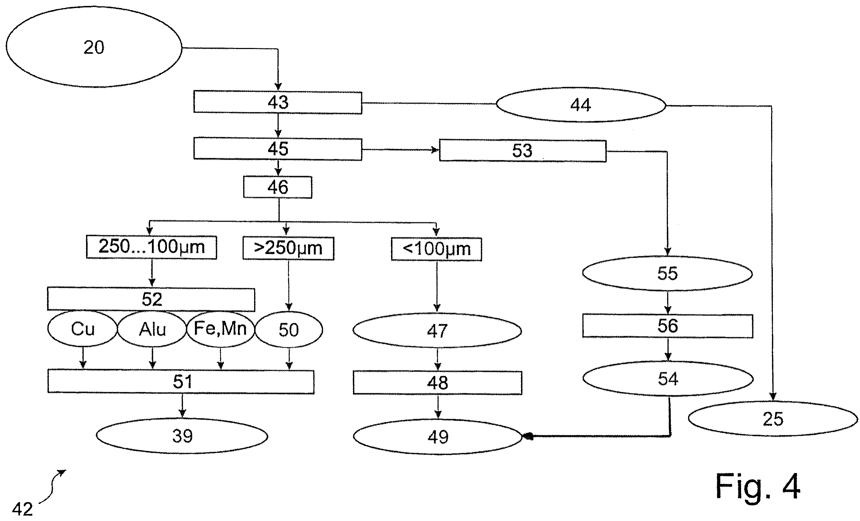

In Figur 4 ist ein dritter Teilprozess 42 gezeigt, der die weitere Aufbereitung der nichtwässrigen Grafit-abgereicherten und mit den partikulären Bestandteilen beladenen Fraktion 20 (siehe Figur 2) beschreibt. Nachfolgend wird auf diesen Bezug genommen.

Diese Fraktion 20 kann zunächst in einer Trocknungseinrichtung, insbesondere in einem Vakuumtrockner 43 getrocknet werden, wobei das dabei anfallende Kondensatwasser 44 dem Wasserkreislauf 25 zugeführt werden kann. Nach der Trocknungseinrichtung 43 kann das Material einer Zerkleinerungseinrichtung, insbesondere einer Prallmühle 45 zugeführt werden, in der eine weitere Zerkleinerung stattfindet. Dem Zerkleinerungsschritt schließt sich sodann ein Siebvorgang 46 zur Auftrennung der hierbei erhaltenen Fraktionen an. Die mehreren Fraktionen (beispielsweise drei) können in der gleichen Größenordnung liegen, wie bei dem zuvor anhand von Figur 3 beschriebenen Siebvorgang 35. Durch den Siebvorgang 46 können beispielsweise wiederum eine erste mittlere Fraktion umfassend Partikel mit einer Größenordnung im Bereich von etwa 250 µm bis etwa 100 µm, eine gröbere Fraktion umfassend Partikel in einer Größenordnung von mehr als 250 µm und eine dritte feinere Fraktion umfassend Partikel in einer Größenordnung von weniger als 100 µm gewonnen werden. Diese dritte feinere Fraktion umfasst eine weitere black-mass enthaltende Fraktion 47, die vorliegend Wasser enthalten kann. Das Wasser kann mittels eines Trennungsschritts, beispielsweise durch Sieben und Pressen 48 entfernt wird. Die sodann getrocknete black-mass Fraktion 49 (=zweite Grafit-haltige Nebenfraktion) kann direkt oder ggf. mit den übrigen Fraktionen 18, 33 zunächst vereint und anschließend der nasschemischen Aufbereitung zugeführt werden (siehe Figur 5).

Die gröbere Fraktion (> 250 µm) enthält in der Regel überwiegend Kunststoffe 50. Diese kann sortenrein gesammelt (Schritt 51) und ebenfalls der Kreislaufwirtschaft 39 zugeführt werden. Die mittlere Fraktion hingegen kann beispielsweise mittels eines Lufttrenntisches und/oder eines Magnetabscheiders 52 weiter aufgetrennt werden, um so die Metalle Kupfer, Aluminium und Eisen sortenrein zu sammeln und ebenfalls der Kreislaufwirtschaft 39 zuzuführen.

Das während des Zerkleinerungsschritts 45 entstehende und einen Teil der zweiten Grafit-haltigen Nebenfraktion 49 enthaltende Aerosol 55 kann durch einen Absaugschritt 53 diesem entzogen und über einen Trennungsschritt 56 gefiltert werden, sodass der darin enthaltene Teil der zweiten Grafit-haltigen Nebenfraktion 49 abgetrennt, insbesondere abgefiltert wird. Die nach durchlaufen des Trennungsschritts bzw. Filtersystems 56 anfallende black-mass Fraktion 54 kann ebenfalls direkt oder ggf. mit den übrigen Fraktionen 18, 33, 49 zunächst vereint und anschließend der nasschemischen Aufbereitung zugeführt werden (siehe Figur 5).

Nachfolgend wird anhand der Darstellung von Figur 5 der Prozess der nasschemischen Aufbereitung (vierter Teilprozess 57) der diversen black-mass enthaltenden Fraktionen 18, 33, 49, 54 näher erläutert.

Die einzelnen oder ggf. vereinten black-mass enthaltenden Fraktionen 18, 33, 49, 54 können beispielsweise mittels wässriger Schwefelsäure, Ammoniak, Wasserstoffperoxid und/oder mittels organischer Lösungsmittel 58 in Lösung gebracht (Schritt 59) und danach einem Sieb- und/oder Filtervorgang 60 unterzogen werden. Dabei kann Grafit 61 abgetrennt, gesammelt 62 und in die Kreislaufwirtschaft 39 zurückgeführt werden. Die nach dieser Abtrennung gewonnenen Metalle 63 befinden sich in einer Lösung, deren pH-Wert je nach Metall gegebenenfalls entsprechend eingestellt wird (Schritt 64). Danach kann eine Extraktion 65 erfolgen, bei der die Metalle beispielsweise als Metallsulfate gewonnen und kristallisiert bzw. erneut extrahiert werden können. Das Einstellen des pH-Werts (Schritt 64) je nach Metall und extrahieren kann mehrstufig erfolgen. Danach können die Metallsulfate 66 der einzelnen Metalle jeder Stufe getrennt und sortenrein gesammelt (Schritt 67) und so als Rohstoffe 68 für die Grundlagenindustrie gewonnen werden. Überflüssiges Ammoniumsulfat 69 kann wie in Figur 5 dargestellt abgeführt und einer Wiederverwertung 70 zugeführt werden.

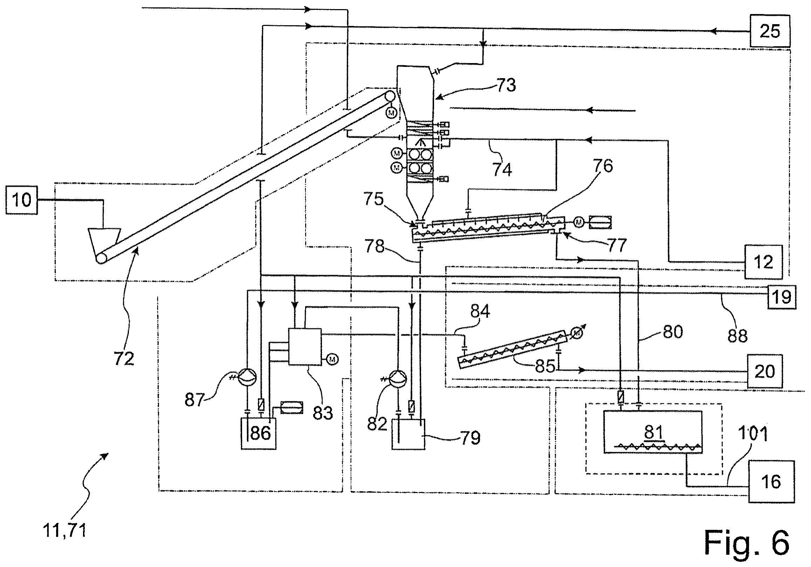

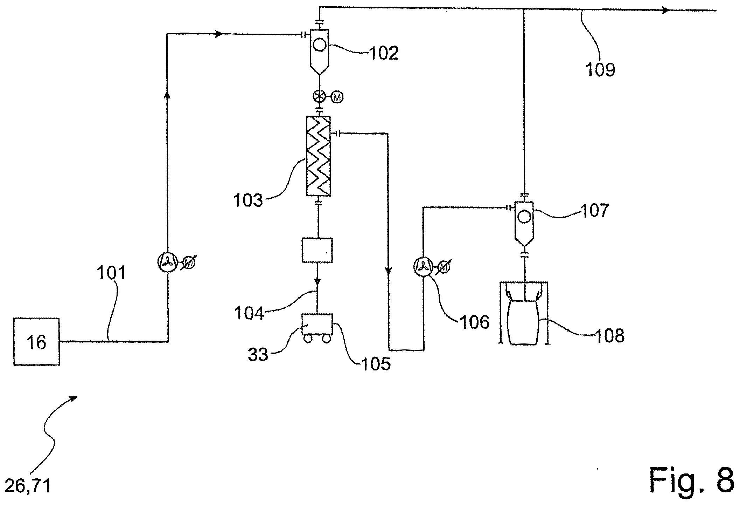

Nachfolgend wird anhand von mehreren schematischen Fließbildern zunächst unter Bezugnahme auf Figur 6 ein beispielhafter Aufbau einer Anlage 71 für den oben beschriebenen Auftrennungsprozess im Detail beschrieben. Wie bereits erläutert, werden die Batterien 2 zunächst in dem Vorprozess 1 aussortiert, demontiert und entladen. Die sodann erhaltenen vereinzelten Batterien, Batteriezellen und/oder Batteriemodule 10 werden über eine Fördereinrichtung, insbesondere ein in Förderrichtung aufsteigendes Förderband 72 einer Zerkleinerungseinrichtung 73, beispielsweise einem Schredder zugeführt und in dieser als Ganzes unter Zugabe von Wasser 12 in zwei Stufen zerkleinert. Für diesen Zerkleinerungsvorgang wird der Zerkleinerungseinrichtung 73 über eine Leitung 74 kontinuierlich Wasser 12 zugeführt, welches über einen Zugang in das Innere der Zerkleinerungseinrichtung 73 gelangt. Unterhalb des unteren Endbereiches der Zerkleinerungseinrichtung 73 befindet sich das Eingangsende 75 eines Friktionswäschers 76, der eine mit Paddeln ausgestattete Förderschnecke umfasst. Der Friktionswäscher 76 umfasst ein unterhalb der geneigt angeordneten Förderschnecke angeordnetes Sieb. Wenn mittels der Förderschnecke das zerkleinerte Material, insbesondere das die zerkleinerten Batterien und das Wasser umfassende Gemisch, vom Eingangsende 75 zum axial gegenüberliegenden Ausgangsende 77 der Förderschnecke gefördert wird (in der Zeichnung von links nach rechts), dann fällt das feinere Material mit einer Partikelgröße von beispielsweise weniger als 1 bis weniger als 3 mm (beispielsweise die erste wässrige Grafit-angereicherte Fraktion 15) durch das Sieb und gelangt über eine Leitung 78 unterhalb des Eingangsendes 75 in einen Puffertank 79. Das gröbere Material mit einer Partikelgröße von beispielsweise mehr als 1 bis mehr als 3 mm (beispielsweise die zweite nicht-wässrige Grafit-abgereicherte Fraktion 16) wird hingegen über die in dem Friktionswäscher 76 angeordnete Förderschnecke zu deren Ausgangsende 77 transportiert, fällt über die dortige Öffnung nach unten und gelangt über die Leitung 80 zunächst in ein Silo 81 von dem aus es dem zweiten Teilprozess 26 zugeführt wird. Dieser wird später unter Bezugnahme auf Figur 8 näher erläutert.

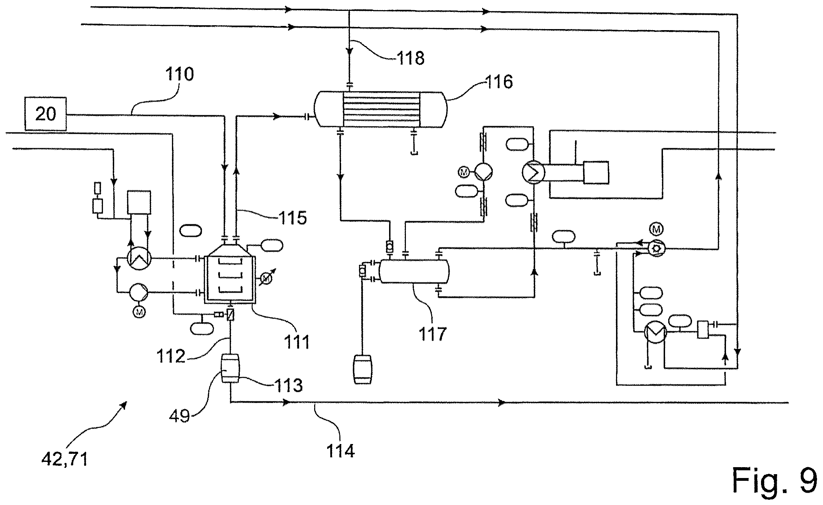

Die Fraktion der feineren Partikel mit einer Größe von beispielsweise weniger als 1 bis weniger als 3 mm wird mittels einer Pumpe 82 zu einem Sieb 83 gefördert, mittels dessen eine weitere Trennung in die beiden Fraktionen 19, 20 erfolgt, nämlich eine Fraktion 19 mit einer Partikelgröße von weniger als beispielsweise 500 µm, die den größten Teil, beispielsweise etwa 95 % der black-mass sowie etwa 5 % Metalle enthält und eine Fraktion 20 mit einer Partikelgröße von mehr als beispielsweise 500 µm, die Metalle, wie Kupfer und Aluminium sowie Kunststoffe mit anhaftender black-mass enthält. Diese Fraktion 20 wird über die Leitung 84 und den Schneckenförderer 85 dem dritten Teilprozess 42 zugeführt, welcher später unter Bezugnahme auf die Figur 9 näher erläutert wird.

Der in der Anlage 71 beispielhaft dargestellte ablaufende Trennprozess 11 lässt sich somit zusammenfassend wie folgt beschreiben. Der Schredder 73, dem Wasser 12 und vereinzelte Batterien, Batteriezellen und/oder -module 10 zugeführt werden, dient auch als Separator, in dem eine erste Separierung der Materialien erfolgt. Dem Shredder 73 wird Wasser zugeführt, um im Wesentlichen die black-mass von den anderen Bestandteilen der vereinzelten Batterien 10 zu entfernen und diese dann abzutransportieren. Der Shredder 73 ist ein weitgehend geschlossener Behälter, welcher mit dem unter dem Behälter angeordneten Gehäuse des Friktionswäschers 76, in dem sich die Förderschnecke befindet, kombiniert ist. Die kombinierte Vorrichtung verfügt über zwei versetzt angeordnete Auslässe. Der erste Auslass, der im Eingangsbereich 75 des Friktionswäschers 76 angeordnet ist, ist mit der Leitung 78 verbunden. Der zweite Auslass, der im Ausgangsbereich 77 des Friktionswäschers 76 angeordnet ist, ist hingegen mit der Leitung 80 verbunden. Über die Maschenweite des Siebs des Friktionswäschers 76, welches sich um die Förderschnecke herum befindet, kann die Größe der kleineren Partikel bestimmt werden, die das Sieb zum ersten Auslass passieren lässt.

In dem Schredder 73 werden die Kleinteile im Wasser verwirbelt, sodass die black-mass abgespült wird. Durch die Kollision der Kleinteile mit dem Gehäuse des Schredders 73 und die Strömungsführungen während des Transports der Partikel in der Vorrichtung wird die black-mass zusätzlich von den Batterieteilen entfernt. Die Förderschnecke in dem Friktionswäscher 76 unterhalb des Schredders 73 umfasst mindestens eine Mischerwelle mit radial angeordneten Hebeln, die durch ihre Form zusätzlich zur Verwirbelung eine Bewegungsrichtung vom Eingangsende 75 zum Ausgangsende 77 mit dem zweiten Auslass erzwingen. Durch den Trennprozess in dem Schredder/Separator 73 verlassen die Metall- und Kunststoffteile die Vorrichtung über den zweiten Auslass im Ausgangsbereich 77 der Förderschnecke, während die black-mass mit dem Wasser durch das Sieb fällt und die Vorrichtung über den ersten Auslass im Eingangsbereich 75 der Förderschnecke verlässt. Die weitere Auftrennung dieses Materials erfolgt dann über das weitere Sieb 83, durch das größere Partikel, vor allem Kunststoffpartikel mit einer Größe von beispielsweise mehr als 500 µm von der im Wasser transportierten black-mass abgetrennt werden. Die Maschenweite des weiteren Siebs 83 kann variieren, so dass beispielsweise kleinere Partikel im Bereich von etwa 100 µm bis etwa 1 mm, vorzugsweise im Bereich von etwa 100 µm bis etwa 500 µm abgetrennt werden.

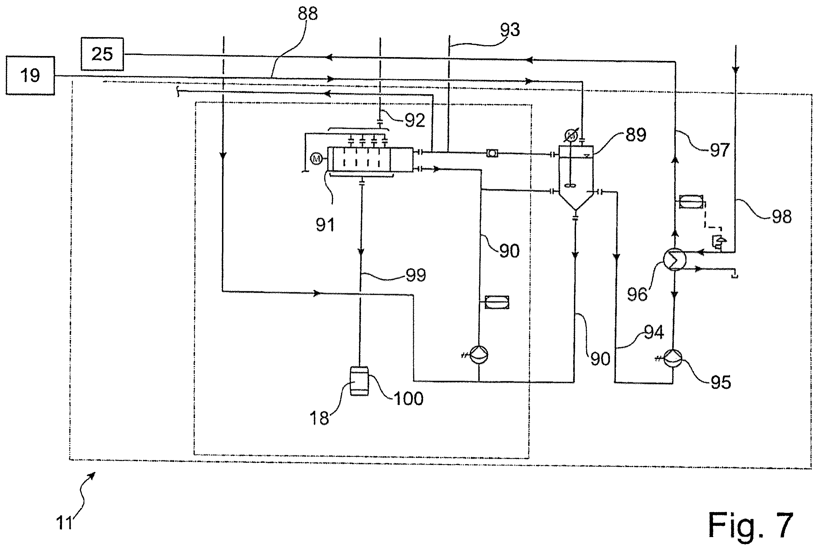

Die feinere Fraktion von Partikeln mit einer Größe von weniger als 500 µm gelangt in den Tank 86 und wird dann mittels einer weiteren Pumpe 87 über die Leitung 88 einem weiteren Trennprozess des ersten Teilprozesses 11 zugeführt, welcher nachfolgend unter Bezugnahme auf die Figur 7 näher erläutert wird.

Diese feinere Fraktion 19 wird gemäß dem Fließbild von Figur 7 durch die Leitung 88 in einen Zirkulationstank 89 gefördert, der mit einem Rührer ausgestattet ist, wobei ein Teilstrom diesen Zirkulationstank 89 über die Leitung 90 verlässt und zu einer Filterpresse 91 gefördert wird, wo durch Abtrennung von Wasser eine Trocknung erfolgt. Hierbei können für die Erwärmung organische Abgase verwendet werden, die über die Leitung 92 der Filterpresse 91 zugeführt werden. Außerdem wird der Filterpresse 91 über die Leitung 93 Druckluft zugeführt. Ein mit Wasser verdünnter Teilstrom dieser Partikelfraktion kann über die Leitung 94 mittels der Pumpe 95 durch einen Wärmetauscher 96 gefördert und von dort über die Rückführleitung 97 in den Prozess gemäß Figur 6 zurückgeführt werden. Der Wärmetauscher 96 wird im Gegenstrom von heißem Leitungswasser durchströmt, welches über die Leitung 98 zum Wärmetauscher 96 gelangt, so dass der zurückgeführte Materialstrom auf diese Weise vorgewärmt werden kann. Als Produkt des in Figur 7 dargestellten Prozesses wird die getrocknete black-mass enthaltende Fraktion 18 gewonnen, die die Filterpresse 91 über die Leitung 99 verlässt und in einem Fass 100 zwischengelagert werden kann. Hier liegt die black-mass in einem bereits recht hohen Reinheitsgrad von beispielsweise etwa 95 % vor, wobei sie eine Restfeuchte im Bereich von etwa 20 % bis 30 % aufweist. Diese black-mass enthaltende Fraktion 18 kann als Einsatzmaterial für einen weiteren nasschemischen Aufbereitungsprozess verwendet werden, welcher in Figur 5 dargestellt ist und oben bereits beschrieben wurde.

Nachfolgend wird der weitere Trennprozess 26 betreffend die Fraktion des nach dem ersten Schreddervorgang gemäß Figur 6 anfallenden groben Materials 16 unter Bezugnahme auf die Figur 8 näher erläutert. Dieser Trennprozess 26 dient in erster Linie dazu, die Separatorfolie der vereinzelten Batterien 10 von den Kunststoff- und Metallpartikeln zu trennen. Die grobe Fraktion gelangt aus dem Silo 81 über die Leitung 101 zunächst zu einem Zyklon 102, in dem eine Fliehkraftabscheidung erfolgt. Anschließend wird die Fraktion einem Zick-Zack-Abscheider 103 zugeführt, in dem die Metalle und Kunststoffe über ein Verfahren separiert werden, welches die Dichtedifferenzen ausnutzt. Im freien Fall sorgen querverlaufende Luftströmungen für eine Trennung der schwereren Metalle von den leichteren Kunststoffresten und Folienresten. Anschließend kann in einer Prallmühle die an den Metallen befindliche black-mass abgeschlagen werden, wie dies bereits anhand von Fig. 3 erläutert worden ist. Über die Leitung 104 kann diese sodann in einen Transportbehälter 105 überführt und sodann der nasschemischen Aufbereitung zugeführt werden. Die leichteren Kunststoffpartikel können über ein Gebläse 106 einem weiteren Zyklon 107 zugeführt werden und die dort abgetrennten Partikel können in einem Behälter 108 aufgefangen werden. Das Abgas aus den beiden Zyklonen 102, 107 kann über die Leitung 109 abgeführt und beispielsweise einer Reinigung, wie einem Scrubber oder dergleichen zugeführt werden.

Die in dem Trennprozess gemäß Figur 6 abgetrennte mittelgrobe Fraktion 20 mit Partikeln von mehr als 500 µm bis zu einer Größe von etwa 2 bis 3 mm, die vorwiegend Kupfer, Aluminium, Eisen, Kunststoffe und anhaftende black-mass enthält, wird in dem Prozess gemäß Figur 9 weiter behandelt, welcher nachfolgend näher erläutert wird. Über die Zuführleitung 110 gelangt dieses Material zu einem Vakuumtrockner 111, in dem es getrocknet wird. Die gewonnene trockene black-mass Fraktion 49 kann aus dem Vakuumtrockner 111 über die Leitung 112 einem Fass 113 zugeführt werden, in dem sie gesammelt wird. Von dort kann diese black-mass Fraktion 49 über die Ausgangsleitung 114 den in den übrigen Trennprozessen gewonnenen black-mass Fraktionen zugeführt und nasschemisch aufbereitet werden, wie dies bereits unter Bezugnahme auf die Figur 5 beschrieben worden ist. Der in dem Vakuumtrockner 111 abgetrennte Wasserdampf kann über die Leitung 115 einem Kondensator 116 zugeführt und dort kondensiert werden, um dann in dem Kondensattank 117 gesammelt zu werden. Zum Kühlen des Wasserdampfs kann industrielles Kühlwasser genutzt werden, welches über die Leitung 118 dem Kondensator 116 zugeführt wird.

### Bezugszeichen

- 1: Vorprozess
- 2: Batterien / Batteriezellen / Batteriemodule
- 3: Identifikationsschritt
- 4: Entladungsschritt
- 5: Energie
- 6: Demontage
- 7: Bestandteile der Batterie
- 8: Trenn- und/oder Sortierschritt
- 9: sortenrein getrennte Reststoffe
- 10: vereinzelte Batterien / Batteriezellen / Batteriemodule
- 11: erster Teilprozess / Trennprozess
- 12: Wasser
- 13: Zerkleinerungsprozess
- 14: Trennungsschritt
- 15: erste wässrige Grafit-angereicherte Fraktion
- 16: zweite nicht-wässrige Grafit-abgereicherte Fraktion
- 17: Trocknungsschritt
- 18: getrocknete Grafit-haltige Fraktion / black-mass enthaltende Fraktion
- 19: erste wässrige Grafit-angereicherte und von den partikulären Bestandteilen befreite Fraktion
- 20: nicht-wässrige Grafit-abgereicherte und mit den partikulären Bestandteilen beladene Fraktion
- 21: Siebschritt
- 22: Siebschritt
- 23: Pressschritt
- 24: verunreinigtes Wasser
- 25: Wasseraufbereitungsschritt / Wasserkreislauf
- 26: zweiter Teilprozess / Trennprozess
- 27: Trennungsschritt / Trenneinrichtung
- 28: leichte Fraktion
- 29: schwere Fraktion
- 30: Absaugschritt
- 31: erste Grafit-haltige Nebenfraktion enthaltende Aerosol
- 32: Trennungsschritt / Filtersystem
- 33: erste Grafit-haltige Nebenfraktion (black-mass enthaltende Fraktion)
- 34: Zerkleinerungseinrichtung / Prallmühle
- 35: Siebvorgang
- 37: Kunststoffe
- 38: Sammeln
- 39: Kreislaufwirtschaft
- 40: Lufttrenntisch / Magnetabscheider
- 41: Sammeln
- 42: dritter Teilprozess
- 43: Trocknungseinrichtung / Vakuumtrockner
- 44: Kondensatwasser
- 45: Zerkleinerungseinrichtung / Prallmühle
- 46: Siebvorgang
- 47: weitere black-mass Fraktion
- 48: Trennungsschritt / Sieben und Pressen
- 49: getrocknete black-mass Fraktion / zweite Grafit-haltige Nebenfraktion (black-mass enthaltende Fraktion)
- 50: Kunststoffe
- 51: Sammeln
- 52: Lufttrenntisch / Magnetabscheider
- 53: Absaugschritt
- 54: black-mass Fraktion
- 55: zweite Grafit-haltige Nebenfraktion enthaltende Aerosol
- 56: Trennungsschritt / Filtersystem
- 57: vierter Teilprozess
- 58: Lösungsmittel
- 59: Auflösen
- 60: Sieb- und/oder Filtervorgang
- 61: Grafit
- 62: Sammeln
- 63: metallische Lösung
- 64: pH-Wert Einstellung
- 65: Extrahieren
- 66: metallische Sulfate
- 67: Sammeln
- 68: Rohstoffe
- 69: Ammoniumsulfat
- 70: Wiederverwertung
- 71: Anlage
- 72: Fördereinrichtung / Förderband
- 73: Zerkleinerungseinrichtung / Schredder
- 74: Leitung
- 75: Eingangsende
- 76: Trenneinrichtung / Friktionswäscher
- 77: Ausgangsende
- 78: Leitung für die erste wässrige Grafit-angereicherte Fraktion
- 79: Puffertank
- 80: Leitung für die zweite nicht-wässrige Grafit-abgereicherte Fraktion
- 81: Silo
- 82: Pumpe
- 83: Trenneinrichtung / Sieb
- 84: Leitung für die nicht-wässrige Grafit-abgereicherte und mit den partikulären Bestandteilen beladene Fraktion
- 85: Schneckenförderer
- 86: Tank
- 87: Pumpe
- 88: Leitung für die erste wässrige Grafit-angereicherte und von den partikulären Bestandteilen befreite Fraktion
- 89: Zirkulationstank
- 90: Leitung
- 91: Filterpresse
- 92: Leitung
- 93: Leitung
- 94: Leitung
- 95: Pumpe
- 96: Wärmetauscher
- 97: Rückführleitung
- 98: Leitung
- 99: Leitung für die getrocknete Grafit-haltige Fraktion
- 100: Fass
- 101: Leitung
- 102: Zyklon
- 103: Trenneinrichtung / Zick-Zack-Abscheider
- 104: Leitung, schwere Fraktion
- 105: Transportbehälter
- 106: Gebläse
- 107: Zyklon
- 108: Behälter
- 109: Leitung für Abgas
- 110: Zuführleitung für die nicht-wässrige Grafit-abgereicherte und mit den partikulären Bestandteilen beladene Fraktion
- 111: Vakuumtrockner
- 112: Leitung
- 113: Fass
- 114: Ausgangsleitung für black-mass
- 115: Leitung zum Kondensator
- 116: Kondensator
- 117: Kondensattank
- 118: Leitung für Kühlwasser

## Patentansprüche

1. Verfahren zur Aufbereitung und Verwertung von Lithium-Ionen-Batterien umfassend wenigstens einen Schritt, in dem eine Zerkleinerung der Batterien (2, 10) in Gegenwart eines wässrigen Mediums (12) erfolgt, **dadurch gekennzeichnet, dass** die Batterien (2, 10) noch mit einer Restladung von maximal 30 % unter Zugabe von Wasser (12) in einer Zerkleinerungseinrichtung (73) zerkleinert werden, wobei das Wasser (12) in einer solchen Menge und mit einer solchen Temperatur zugeführt wird, dass sich das Gemisch beim Zerkleinern nicht über eine Temperatur von mehr als 40 °C, bevorzugt nicht über eine Temperatur von 30 °C hinaus erwärmt.

2. Verfahren nach Anspruch 1, **dadurch gekennzeichnet, dass** das Wasser (12) bezogen auf eine Menge von 1000 kg Batterien (2, 10) pro Stunde in einer Menge von 20 bis 200 m³/h zugeführt wird.

3. Verfahren nach Anspruch 1 oder 2, **dadurch gekennzeichnet, dass** das Wasser (12) mit einer Temperatur unter der Raumtemperatur, vorzugsweise mit einer Temperatur im Bereich von 5 °C bis 20 °C zugeführt wird.

4. Verfahren nach einem der vorhergehenden Ansprüche, **dadurch gekennzeichnet, dass** das Zerkleinern in mindestens zwei Stufen erfolgt, derart, dass die Batterien (2, 10) zunächst in einer ersten Stufe grob und in einer sich anschließenden zweiten Stufe fein zerkleinert werden.

5. Verfahren nach einem der vorhergehenden Ansprüche, **dadurch gekennzeichnet, dass** das die zerkleinerten Batterien und das Wasser umfassende Gemisch in eine erste wässrige Grafit-angereicherte Fraktion (15), welche gegebenenfalls auch Metalloxide enthält, und eine zweite nicht-wässrige Grafit-abgereicherte Fraktion (16) aufgetrennt wird.

6. Verfahren nach Anspruch 5, **dadurch gekennzeichnet, dass** die Auftrennung in die erste und die zweite Fraktion (15, 16) über zwei separate Prozessstufen erfolgt, derart, dass das Gemisch zunächst in einer ersten Prozessstufe
i) in eine erste wässrige Grafit-angereicherte Fraktion umfassend partikuläre Bestandteile mit einer Größe von < 5000 µm, vorzugsweise mit einer Größe von < 4000 µm, mehr bevorzugt mit einer Größe von < 3000 µm, noch mehr bevorzugt mit einer Größe von < 2000 µm, und eine zweite nicht-wässrige Grafit-abgereicherte Fraktion umfassend partikuläre Bestandteile mit einer Größe von > 5000 µm, vorzugsweise mit einer Größe von > 4000 µm, mehr bevorzugt mit einer Größe von > 3000 µm, noch mehr bevorzugt mit einer Größe von > 2000 µm aufgetrennt wird, und ggf.
ii) die erste wässrige Grafit-angereicherte Fraktion umfassend die partikulären Bestandteile mit einer Größe von < 5000 µm, vorzugsweise mit einer Größe von < 4000 µm, mehr bevorzugt mit einer Größe von < 3000 µm, noch mehr bevorzugt mit einer Größe von < 2000 µm sodann in einer zweiten Prozessstufe in eine erste wässrige Grafit-angereicherte und von den partikulären Bestandteilen befreite Fraktion (19) und eine nicht-wässrige Grafit-abgereicherte und mit den partikulären Bestandteilen beladene Fraktion (20) aufgetrennt wird.

7. Verfahren nach Anspruch 5 oder 6, **dadurch gekennzeichnet, dass** die erste wässrige Grafit-angereicherte (15), und gegebenenfalls von den partikulären Bestandteilen befreite Fraktion (19), von Wasser befreit wird, so dass eine getrocknete Grafit-haltige Fraktion (18) erhalten wird.

8. Verfahren nach Anspruch 7, **dadurch gekennzeichnet, dass** das erhaltene Wasser gesammelt, sodann über einen Wärmetauscher (96) abgekühlt und anschließend der Zerkleinerungseinrichtung (73) und/oder dem die zerkleinerten Batterien und das Wasser umfassenden Gemisch wieder zugeführt wird.

9. Verfahren nach einem der vorhergehenden Ansprüche 5 bis 8, **dadurch gekennzeichnet, dass** die zweite nicht-wässrige Grafit-abgereicherte Fraktion (16), gegebenenfalls die zweite nicht-wässrige Grafit-abgereicherte Fraktion umfassend partikuläre Bestandteile mit einer Größe von > 5000 µm, vorzugsweise mit einer Größe von > 4000 µm, mehr bevorzugt mit einer Größe von > 3000 µm, noch mehr bevorzugt mit einer Größe von > 2000 µm über eine Trenneinrichtung, insbesondere einen Zick-Zack-Abscheider (103) geführt und in eine schwere Fraktion (29) enthaltend partikuläre Bestandteile mit einer Schüttdichte von mindestens 0,02 kg/m³ und in eine leichte Fraktion (28) enthaltend partikuläre Bestandteile mit einer Schüttdichte von maximal 0,40 kg/m³ aufgetrennt wird.

10. Verfahren nach Anspruch 9, **dadurch gekennzeichnet, dass** die eine erste Grafit-haltige Nebenfraktion (33) enthaltende schwere Fraktion (29) einer weiteren Zerkleinerungseinrichtung (34), insbesondere einer Prallmühle zugeführt und in dieser zerkleinert wird.

11. Verfahren nach Anspruch 10, **dadurch gekennzeichnet, dass** die zerkleinerte und die erste Grafit-haltige Nebenfraktion (33) enthaltende schwere Fraktion (29) in sortenreine metallische Fraktionen aufgetrennt wird.

12. Verfahren nach einem der vorhergehenden Ansprüche 9 bis 11, **dadurch gekennzeichnet, dass** das während des Trennungsprozesses und/oder des Zerkleinerungsprozesses entstehende und einen Teil der ersten Grafit-haltigen Nebenfraktion enthaltende Aerosol (31) abgesaugt und der darin enthaltene Teil der ersten Grafit-haltigen Nebenfraktion (33) abgetrennt, insbesondere abgefiltert wird.

13. Verfahren nach einem der vorhergehenden Ansprüche 6 bis 12, **dadurch gekennzeichnet, dass** die nicht-wässrige Grafit-abgereicherte und mit den partikulären Bestandteilen beladene Fraktion (20), gegebenenfalls über eine Trocknungseinrichtung (43), insbesondere einen Vakuumtrockner (43, 111), getrocknet wird.

14. Verfahren nach Anspruch 13, **dadurch gekennzeichnet, dass** das während des Trocknungsprozesses entstehende dampfförmige Kondensatwasser zunächst zum Warmwasser kondensiert und gegebenenfalls sodann über einen Wärmetauscher abgekühlt wird.

15. Verfahren nach Anspruch 13 oder 14, **dadurch gekennzeichnet, dass** die getrocknete nicht-wässrige Grafit-abgereicherte und mit den partikulären Bestandteilen beladene Fraktion (20), welche eine zweite Grafit-haltige Nebenfraktion (49) umfasst, einer weiteren Zerkleinerungseinrichtung (45), insbesondere einer Prallmühle zugeführt und zerkleinert wird.

16. Verfahren nach Anspruch 15, **dadurch gekennzeichnet, dass** die zerkleinerte und die zweite Grafit-haltige Nebenfraktion (49) enthaltende Fraktion in weitere sortenreine metallische Fraktionen aufgetrennt wird.

17. Verfahren nach Anspruch 15 oder 16, **dadurch gekennzeichnet, dass** das während des Zerkleinerungsprozesses entstehende und einen Teil der zweiten Grafit-haltigen Nebenfraktion (49) enthaltende Aerosol (55) abgesaugt und der darin enthaltene Teil der zweiten Grafit-haltigen Nebenfraktion (49) abgetrennt, insbesondere abgefiltert wird.

18. Verfahren nach einem der vorhergehenden Ansprüche 7 bis 17, **dadurch gekennzeichnet, dass** die getrocknete Grafit-haltige Fraktion (18) und/oder die erste und/oder die zweite Grafit-haltige Nebenfraktion (33, 49) mit konzentrierter Schwefelsäure versetzt wird, so dass ein Grafit-haltiger Aufschluss erhalten wird, und der erhaltene Grafit-haltige Aufschluss direkt gefiltert wird, so dass Grafit (61) und eine schwefelsaure Lösung erhalten werden.

19. Verfahren nach Anspruch 18, **dadurch gekennzeichnet, dass** das abgefilterte Grafit (61) gereinigt, insbesondere mit Wasser gespült wird.

20. Verfahren nach Anspruch 18 oder 19, **dadurch gekennzeichnet, dass** die schwefelsaure Lösung, die zumindest ein Metall der ersten und/oder der dritten Hauptgruppe und/oder zumindest ein Metall der 7. bis 11. Nebengruppe umfasst, nasschemisch aufgetrennt und/oder nasschemisch extrahiert wird.

21. Anlage (71) zur Aufbereitung und Verwertung von Lithium-haltigen Batterien, wobei die Anlage (71) vorzugsweise dazu ausgebildet ist das Verfahren nach einem der vorhergehenden Ansprüche auszuführen, umfassend wenigstens eine Zerkleinerungseinrichtung (73), die eine mit einem wässrigen Medium umspülbare Zerkleinerungseinheit aufweist, **dadurch gekennzeichnet, dass** die Anlage (71) weiterhin mindestens eine der Zerkleinerungseinrichtung (73) im Transportweg nachgeschaltete erste Trenneinrichtung (76) aufweist, welche wenigstens ein Sieb umfasst, geeignet in der Zerkleinerungseinrichtung (73) gewonnenes Material in wenigstens zwei Fraktionen (15, 16) unterschiedlicher Partikelgröße aufzutrennen.

22. Anlage (71) nach Anspruch 21, **dadurch gekennzeichnet, dass** die Zerkleinerungseinheit zumindest zwei der Schwerkraft folgend untereinander angeordnete Zerkleinerungsstufen umfasst.

23. Anlage (71) nach Anspruch 21 oder 22, **dadurch gekennzeichnet, dass** die wenigstens eine erste Trenneinrichtung (76) eine im Transportweg nachgeschaltete weitere Trenneinrichtung (83) aufweist, welche wenigstens ein Sieb (83) umfasst, geeignet wenigstens eine zuvor in der ersten Trenneinrichtung (76) abgetrennte Fraktion (15) in wenigstens zwei weitere Fraktionen (19, 20) unterschiedlicher Partikelgröße aufzutrennen.

24. Anlage (71) nach einem der Ansprüche 21 bis 23, **dadurch gekennzeichnet, dass** die wenigstens eine erste Trenneinrichtung (76) eine im Transportweg nachgeschaltete Trocknungseinrichtung, vorzugsweise eine Filterpresse (91) oder einen Vakuumtrockner (43, 111) umfasst, für die Trocknung einer mittels der Trenneinrichtung zuvor abgetrennten Fraktion (19, 20).

25. Anlage (71) nach einem der Ansprüche 21 bis 24, **dadurch gekennzeichnet, dass** wenigstens eine Zerkleinerungseinrichtung als Prallmühle (34, 45) ausgebildet ist, wobei diese Prallmühle (34, 45) im Transportweg wenigstens einer Trenneinrichtung (76) nachgeschaltet ist und dazu dient, die Partikel einer zuvor abgetrennten Fraktion (20, 29) weiter zu verkleinern.

26. Anlage (71) nach einem der Ansprüche 21 bis 25, **dadurch gekennzeichnet, dass** diese wenigstens eine weitere Trenneinrichtung (27, 103) umfasst, mittels derer leichtere und schwerere Partikel durch eine Querluftströmung im freien Fall voneinander getrennt werden, wobei diese weitere Trenneinrichtung (27, 103) im Transportweg wenigstens einer Trenneinrichtung (76), die ein Sieb umfasst, nachgeschaltet ist.

27. Anlage (71) nach einem der Ansprüche 21 bis 26, **dadurch gekennzeichnet, dass** diese im Transportweg stromabwärts wenigstens einer Zerkleinerungseinrichtung (73) und stromabwärts wenigstens einer Trenneinrichtung (27, 83, 103) wenigstens einen Anlagenbereich umfasst, in dem die Partikel wenigstens einer zuvor abgetrennten Fraktion (18, 33, 49, 54) in einem flüssigen Medium in Lösung gebracht und anschließend einem weiteren Trennprozess unterzogen werden, wobei dieser Anlagenbereich insbesondere eine Einrichtung zum Sieben und/oder Pressen und/oder Einstellen des pH-Werts und/oder Extrahieren und/oder Auskristallisieren umfasst.
